# EUROPEAN PATENT APPLICATION

(11) **EP 2 498 372 A2**
(43) Date of publication of application: **12.09.2012**
(21) Application number: 10827008.3
(22) Date of filing: 21.10.2010
(51) Int. Cl.: H02J 9/00, H02J 9/04

(54) **STANDBY POWER REDUCTION DEVICE**

(30) Priority: 02.11.2009 KR 20090104960
(71) Applicant: Korchip Corporation, Anyang-si, Gyeonggi-do 430-010 (KR)
(72) Inventor: CHOI, Soon Joo, Anyang-si Gyeonggi-do 430-812 (KR); SON, Jin Hyung, Anyang-si Gyeonggi-do 430-812 (KR)
(74) Representative: Cabinet Plasseraud
(86) International application number: PCT/KR2010/007219
(87) International publication number: WO 2011/052924

(57) **Abstract**

Disclosed is an apparatus for reducing standby power, which is capable of minimizing standby power losses by using an electric double layer capacitor (ELDC). The apparatus includes: an electric double layer capacitor for converting electrical energy supplied from the AC power source into DC power and storing the converted electrical energy; a charging circuit for charging the electrical energy in the electric double layer capacitor; a voltage conversion circuit for converting the electrical energy charged in the electrical double layer capacitor into a stable voltage; a voltage detection circuit for detecting a charged voltage of the electric double layer capacitor; and a power supply control circuit for turning on/off a power switch in response to a command from the voltage detection circuit, wherein the power supply control circuit uses the electrical energy charged in the electrical double layer capacitor to turn on/off the power switch.

## Description

### [Technical Field]

The present invention relates to an apparatus for reducing standby power.

### [Background Art]

Owing to cost reduction and user convenience resulting from the recent development of the semiconductor technology, most electronic devices employs a smart on/off method, which uses a soft-touch switch, remote control, or automatic sensing switch by microcomputer control, rather than using an outdated mechanical power switch.

However, an on/off circuit controlled by microcomputer control must keep a power supply unit of an electronic device working because the microcomputer has to wait for an 'on command' from a user while operating even when the electronic device is in off state. Although the power consumption of the microcomputer is very small due to the development of the semiconductor technology, it is impossible for the power supply unit to supply a very small amount of electric power while using 220V commercial AC power. This causes a considerable power loss generated in the power supply unit, and power loss continuously occurs for a long period of time during which the electronic device is not working.

Due to these circumstances, most electronic devices generate quite a large amount of standby power loss, and the resulting waste of energy and environmental pollution caused by greenhouse gas emissions are getting serious. Many (mainly developed) countries are making efforts including enacting laws and ordinances enforcing the reduction of standby power of electronic devices and developing technologies.

### [Disclosure]

### [Technical Problem]

The present invention provides an apparatus for reducing standby power, which is capable of minimizing standby power losses by using an electric double layer capacitor (ELDC).

### [Technical Solution]

According to the present invention, there is disclosed an apparatus for reducing standby power in an electronic device operating by an AC power source, the apparatus including: an electric double layer capacitor for converting electrical energy supplied from the AC power source into DC power and storing the converted electrical energy; a charging circuit for charging the electrical energy in the electric double layer capacitor; a voltage conversion circuit for converting the electrical energy charged in the electrical double layer capacitor into a stable voltage; a voltage detection circuit for detecting a charged voltage of the electric double layer capacitor; and a power supply control circuit for turning on/off a power switch in response to a command from the voltage detection circuit, wherein the power supply control circuit uses the electrical energy charged in the electrical double layer capacitor to turn on/off the power switch.

The electrical double layer capacitor may be charged with electrical energy within several or several tens of seconds. The electronic device may further include a controller for controlling the electronic device. The voltage conversion circuit may provide a stable voltage to the controller.

The power supply control circuit may give the power switch an ON command by performing OR operation of an ON command from the voltage detection circuit and an ON command from the controller. The power supply control circuit may give the power switch an OFF command by performing AND operation of an OFF command from the voltage detection circuit and an OFF command from the control circuit.

When the charged voltage of the electric double layer capacitor reaches a charge initiation voltage, the voltage detection circuit may send an ON signal to the power supply control circuit. When the charged voltage of the electric double layer capacitor reaches a charge complete voltage, the voltage detection circuit may send an OFF signal to the power supply control circuit.

The electronic device may include a power supply unit for supplying electric power, and the power switch may connect or disconnect the AC power source to or from the power supply unit. The charging circuit may take charging power from the power supply unit when charging the electric double layer capacitor.

When the electronic device is in OFF state and the charged voltage of the electric double layer capacitor reaches the charge initiation voltage, the electric double layer capacitor may be recharged within several or several tens of seconds by constant current charging. Furthermore, when the electronic device is in OFF state, the electric double layer capacitor may be charged by constant current charging, and when the charged voltage of the electric double layer capacitor reaches a charge complete voltage, the charging may be stopped.

When the electronic device is in ON state, the electric double layer capacitor may be charged by constant current charging, and when the charged voltage of the electric double layer capacitor reaches the charge complete voltage, the electric double layer capacitor may be fully charged by constant voltage charging.

When the power code of the electronic device is separated on purpose from the AC power source, the charged voltage of the electric double layer capacitor may be equal to or lower than a charge initiation voltage and the switch may be turned on, and when the power power code is re-connected to the AC power source, the electronic device may be connected to the AC power source by the turned-on power switch.

### [Advantageous Effects]

An apparatus for reducing standby power according to an exemplary embodiment of the present invention can minimize standby power losses by using energy charged in an electric double layer capacitor (ELDC) as energy for switching an electronic device from ON state to OFF state or from OFF state to ON state.

Moreover, the apparatus for reducing standby power according to an exemplary embodiment of the present invention can reduce power loss to zero by completely shutting off AC power even when an electronic device is in standby state.

### [Description of Drawings]

FIG. 1 is a circuit diagram of an electronic device that uses an apparatus for reducing standby power according to an exemplary embodiment of the present invention;
FIG. 2 is a graph showing the operation of the charging circuit shown in FIG. 1;
FIG. 3 is a sequential diagram showing the operation of the voltage detection circuit shown in FIG. 1;
FIGS. 4a and 4b are logic diagrams showing the operation of the power supply control circuit shown in FIG. 1; and
FIG. 5 is a graph showing the operation of the apparatus for reducing standby power according to an exemplary embodiment of the present invention.

### [Best Mode]

An exemplary embodiment of the present invention will be set forth in detail with reference to the accompanying drawings so that those skilled in the art can easily carry out the invention.

As used herein, the statement that a part is "electrically connected" to another part shall mean that the parts are connected together either directly or through intermediate elements.

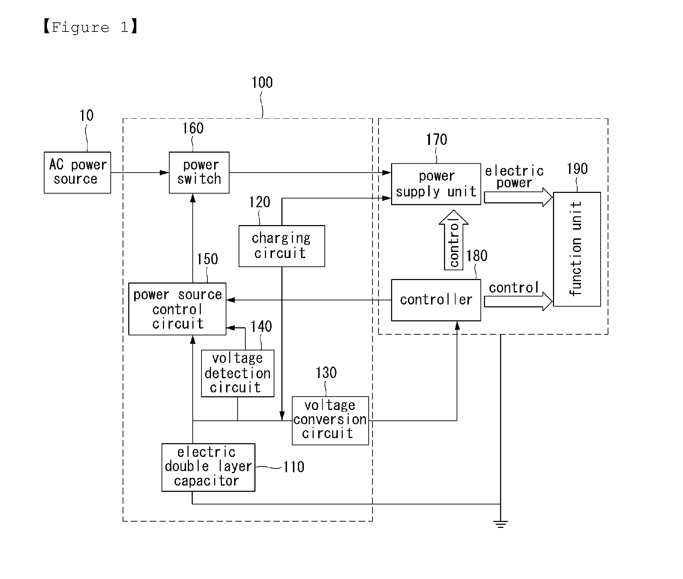

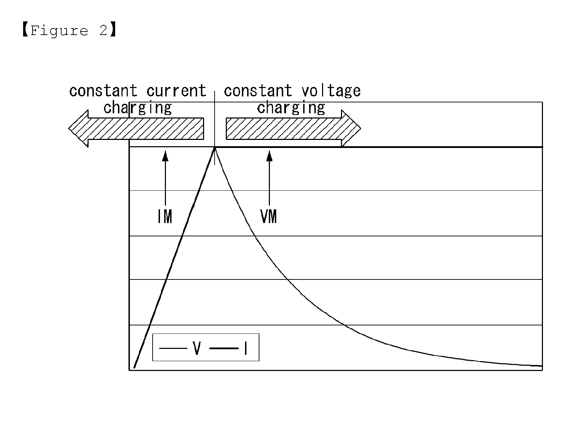

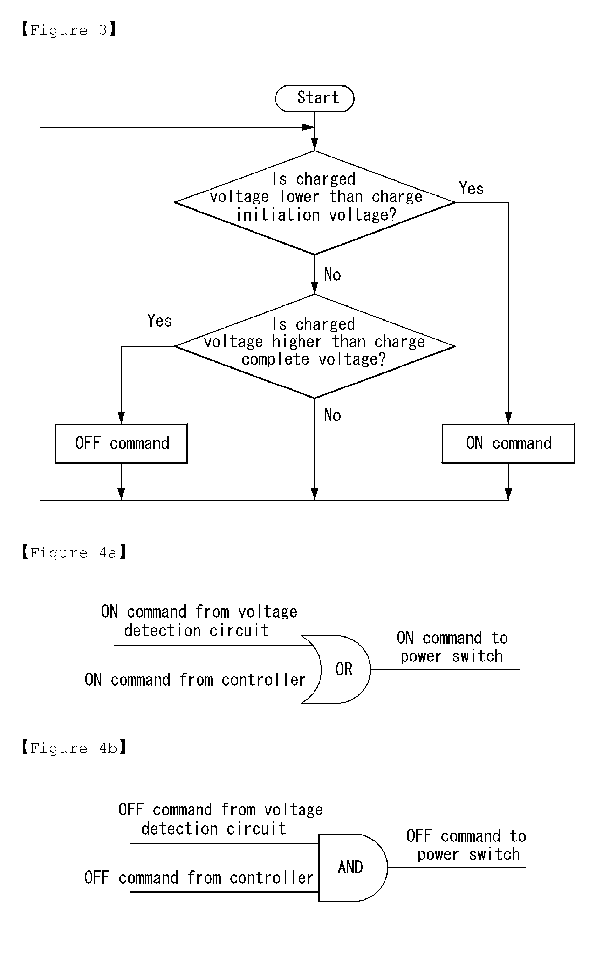

FIG. 1 is a circuit diagram of an electronic device that uses an apparatus for reducing standby power according to an exemplary embodiment of the present invention. FIG. 2 is a graph showing the operation of the charging circuit shown in FIG. 1. FIG. 3 is a sequential diagram showing the operation of the voltage detection circuit shown in FIG. 1. FIGS. 4a and 4b are logic diagrams showing the operation of the power supply control circuit shown in FIG. 1.

As shown in FIG. 1, the apparatus 100 for reducing standby power in an electronic device operating by an AC power source 10 includes an electric double layer capacitor 110 storing electrical energy supplied from the AC power source 10, a charging circuit 120 charging the electrical energy in the electric double layer capacitor 110, a voltage conversion circuit 130 converting the electrical energy charged in electric double layer capacitor 110 into a stable voltage, a voltage detection circuit 140 detecting a charged voltage of the electric double layer capacitor 110, and a power source control circuit 150 turning on/off a power switch 160 in response to a command from the voltage detection circuit 140.

Moreover, the electronic device includes a power supply unit 170 supplying power, a controller 180 controlling the electronic device, and a function unit 190 for performing various functions by the control of the controller 180.

The controller 180 may be a microcomputer or digital circuit, but the present invention is not limited thereto.

The electric double layer capacitor 110 may store electrical energy. Moreover, the electric double layer capacitor 110 has a large capacitance, and is capable of quick charging within several or several tens of seconds. The electric double layer capacitor 110 may store electrical energy when the electronic device is in ON state, and provide the stored electrical energy to the controller 180 even when the electronic device is in OFF state.

Referring to FIG. 2, the operation of the charging circuit will be described below in detail.

The charging circuit 120 may stably charge electrical energy in the electric double layer capacitor 110. The electric double layer capacitor 110 may excessively absorb electric current when there is no charged voltage V, thereby causing a severe loss in the power supply unit 170 of the electronic device. Therefore, the charging circuit 120 conducts constant current charging, which causes only safe current IM to constantly flow until the electric double layer capacitor 110 initiates charging and the charged voltage V reaches the maximum charged voltage VM, thereby protecting the power supply unit 170. Moreover, the electric double layer capacitor 110 should be continuously supplied with electric current even when the charged voltage V reaches the maximum charged voltage VM in order to enable complete charging. Due to this reason, when the charged voltage V of the electric double layer capacitor 110 reaches the maximum charged voltage VM, the charging circuit 120 may keep required electric current flowing continuously so as to switch to constant voltage charging and allow the electric double layer capacitor 110 to perform sufficient charging.

The voltage conversion circuit 130 may convert the electrical energy charged in the electric double layer capacitor 110 into a stable voltage. The voltage conversion circuit 130 converts the electrical energy into a stable voltage, regardless of changes in the charged voltage V of the electric double layer capacitor 110, and provides it to the controller 180. That is, the charged voltage V of the electric double layer capacitor 110 may vary a lot depending on the amount of charged electrical energy, but the voltage conversion circuit 130 converts the electrical energy into a voltage for enabling the controller 180 to perform a stable operation and provides it to the controller 180, regardless of variations in the charged voltage.

The voltage detection circuit 140 may detect the charged voltage V of the electric double layer capacitor 110 and check the amount of charged electrical energy. When there is a possibility that the electrical energy charged in the electric double layer capacitor 110 will be exhausted because of the standby state of the electronic device sustained for a long period of time, the voltage detection circuit 140 sends an ON command to the power supply control circuit 150. Moreover, when the electric double layer capacitor 110 reaches an appropriate charging condition, it sends an OFF command to the power supply control circuit 150. That is, the voltage detection circuit 140 detects the charged voltage V of the electric double layer capacitor 110 and sends a command for turning ON/OFF the power switch 160 to the power supply control circuit 150, when the charged voltage V drops to a charge initiation voltage VL or lower or rises to a charge complete voltage VH or higher, in order to control the electric double layer capacitor 110 to keep the charged voltage V constant.

The operation of the power supply control circuit 150 will be described below in detail with reference to FIG. 3. The voltage detection circuit 140 detects a voltage charged in the electric double layer capacitor 110, and gives the power supply control circuit 150 a command for turning on/off the power switch 160. If the charged voltage V of the electric double layer capacitor is equal to or lower than the charge initiation voltage VL, the voltage detection circuit 140 gives the power supply control circuit 150 an ON command. Having received the ON command from the voltage detection circuit 140, the power supply control circuit 150 turns on the power switch 160 to connect the power supply unit 170 to the AC power source 10. The charging circuit 120 charges the electric double layer capacitor 110. If the voltage charged in the electric double layer capacitor 110 is equal to or higher than the charge complete voltage VH, the voltage detection circuit 140 gives the power supply control circuit 150 an OFF command. Having received the OFF command from the voltage detection circuit 140, the power supply control unit 150 turns off the power switch 160 to disconnect the power supply unit 170 from the AC power source 10. The charging circuit 120 stops charging of the electric double layer capacitor 110.

With the ON command given by the voltage detection circuit 140, if the voltage charged in the electric double layer capacitor 110 is equal to or lower than the charge complete voltage VH, the voltage detection circuit 140 continues to maintain the ON command state. With the OFF command given by the voltage detection circuit 140, if the voltage charged in the electric double layer capacitor 110 is equal to or higher than the charge initiation voltage VL, the voltage detection circuit 140 continues to maintain the OFF command state. The voltage detection circuit 140 permanently repeats the above operation to check a charging condition of the electric double layer capacitor 110 and allow the power supply control circuit 150 to select an action appropriate for a situation, so that the electric double layer capacitor 110 is able to maintain the charging condition.

The power supply control circuit 150 may receive a command from the voltage detection circuit 140 and turn on/off the power switch 160. Moreover, the power supply control circuit 150 may receive a command from the controller 180 and turn on/off the power switch 160. At this point, the power supply control circuit 150 may use the electrical energy charged in the electric double layer capacitor 110 to turn on/off the power switch 160.

The operation of the power supply control circuit 150 will be described with reference to FIGS. 4a and 4b. The power supply control circuit 150 performs OR operation of two commands in recognizing ON commands from the voltage detection circuit 140 and the controller 180. That is, the power supply control circuit 150 turns on the power switch 160 when either one of the voltage detection circuit 140 and the controller 180 has given an ON command or both of them have given ON commands. The power supply control circuit 150 performs AND operation of two commands in recognizing OFF commands from the voltage detection circuit 140 and the controller 180. That is, the power supply control circuit 150 turns off the power switch 160 only when both of the voltage detection circuit 140 and the controller 180 have given OFF commands.

As such, by using the electrical energy charged in the electric double layer capacitor 110 to turn on/off the power switch 160, the power supply control circuit 150 is able to completely cut off connections to the AC power source 10 when the power switch 160 is in off state, whereby standby power losses can be minimized.

The power switch 160 is started up by electric power supplied by the power supply control circuit 150 and connects or disconnects the AC power source 10 to or from the power supply unit 170 of the electronic device. Moreover, the power switch 160 is always able to maintain the ON state when the voltage charged in the electric double layer capacitor 110 is equal to or lower than the charge initiation voltage VL.

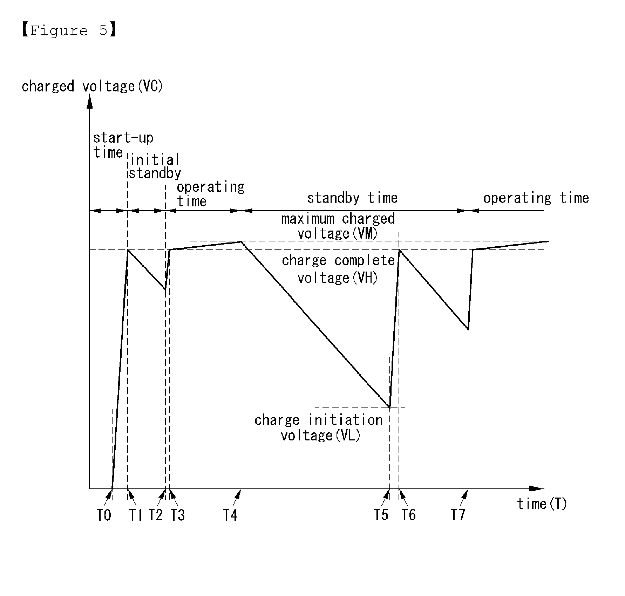

FIG. 5 is a graph showing the operation of the apparatus for reducing standby power according to an exemplary embodiment of the present invention.

Referring to FIG. 5, the operational process of the apparatus for reducing standby power will be described below.

When an electronic device is connected first to the AC power source 10 at time T0, the power switch 160 maintains the ON state. Thus, the power supply unit 170 of the electronic device is operated to conduct constant current charging of the electric double layer capacitor 110 through the charging circuit 120 connected to the power supply unit 170. The charging circuit 120 charges the electric double layer capacitor 110 safely within several or several tens of seconds while protecting the power supply unit 170 of the electronic device. At this point, the controller 180 has not given the electronic device an ON command yet. Thus, only the power supply unit 170 of the electronic device is operated to conduct nothing but charging of the electric double layer capacitor 110.

Due to the charging of the electric double layer capacitor 110, if the charged voltage V rises and reaches the charge complete voltage VH at time T1, the voltage detection circuit 140 gives the power supply control circuit 150 an OFF command while the charging circuit 120 has not been switched to a constant voltage charging state. Having received the OFF command from the voltage detection circuit 140, the power supply control circuit 150 can turn off the power switch 160 and completely isolate the power supply unit 170 of the electronic device from the AC power source 10. When the charged voltage V of the electric double layer capacitor 110 reaches an appropriate level, the voltage conversion circuit 130 converts the charged voltage of the electric double layer capacitor 110 into a voltage appropriate to operate the controller 180 and supplies it to the controller 180, whereby the controller 180 is able to work properly.

When a user gives the controller 180 an ON command at time T2, the controller 180 transmits the ON command to the power supply control circuit 150 and at the same time operates the function unit 190 of the electronic device to allow the function unit 190 to perform functions. Having received the ON command from the controller 180, the power supply control circuit 150 may turn on the power switch 160 by the electrical energy charged in the electric double layer capacitor 110 and connect the AC power source 10 to the power supply unit 170 of the electronic device to operate the electronic device. The power supply unit 170 of the electronic device, having the AC power source 10 connected thereto by means of the power switch 160, supplies electric power to the function unit 190, and at the same time supplies the charging circuit 120 with electric power required to charge the electric double layer capacitor 110.

The charging circuit 120 conducts constant current charging during a time period from T2 to T3 when the charged voltage V of the electric double layer capacitor 110 has not reached the charging complete voltage VH yet, thereby protecting the power supply unit 170 of the electronic device and achieving safe charging in as short a period of time as possible. During a time period after T3 when the charged voltage V of the electric double layer capacitor 110 reaches the charge complete voltage VH, the charging circuit 12 switches the charging mode from constant current charging to constant voltage charging to supply electric current required for the electric double layer capacitor 110 to perform complete charging. As a consequence, the electric double layer capacitor 110 is charged up to the maximum charged voltage VM.

When the user gives the controller 180 an OFF command at time T4, the controller 180 turns off the function unit 190 of the electronic device and at the same time transmits the OFF command to the power supply control circuit 150. Typically, the time period from T2 to T4 is an enough period of time for completely charging the electric double layer capacitor 110. Hence, the power supply control circuit 150 having received the OFF command from the controller 180 turns off the power switch 160 to completely disconnect the power supply unit 170 of the electronic device from the AC power source 10. However, even if the operating time of the electronic device is extremely short and the charged voltage V of the electric double layer capacitor 110 has not reached the charge complete voltage VH yet during the time period from T2 to T4 yet, the controller 180 gives the power supply control circuit 150 an ON command and additionally charges the electric double layer capacitor 110 to some extent during the time period from T2 to T4, whereby the charged voltage V of the electric double layer capacitor 110 maintains its voltage between the charge initiation voltage VL and the charge complete voltage VH. That is, the voltage detection circuit 140 is kept in the OFF command state given at time T1 because the charged voltage V of the electric double layer capacitor 110 has not reached the charge initiate voltage VL. Thus, the power supply control circuit 150 having received the OFF command from the controller 180 at time T4 can turn of the power switch 160 and completely cut off the connection between the AC power source 10 and the power supply unit 170.

In the off state of the electronic device, the power supply unit 170 is completely isolated from the AC power source 10. At this point, power loss of the electronic device is zero. However, the controller 180 has to keep waiting for an ON command from the user, and therefore the voltage conversion circuit 130 converts the electrical energy charged in the electric double layer capacitor 110 into a voltage appropriate to operate the controller 180 and supplies it to the controller 180. Since the power consumed by the controller 180 is very small, the charged voltage V of the electric double layer capacitor 110 gradually drops. However, when time T5 is reached after the lapse of a long standby time, the charged voltage V of the electric double layer capacitor 110 reaches the charge initiation voltage VL. When the charged voltage V of the electric double layer capacitor 110 reaches the charge initiation voltage VL, the voltage detection circuit 140 gives the power supply control circuit 150 an ON command for turning on the power switch 160. Having received the command from the voltage detection circuit 140, the power supply control circuit 150 turns on the power switch 160 to connect the power supply unit 170 of the electronic device to the power switch 160. The power supply unit 170 of the electronic device connected to the AC power 10 is operated to supply a power-supply voltage to the charging circuit 120, and the charging circuit 120 conducts constant current charging of the electric double layer capacitor 110 by using the electric power supplied from the power supply unit of the electronic device. However, the controller 180 then has not given the electronic device an ON command yet, so electric power is supplied not to the function unit 190 of the electronic device but only to the charging circuit 120. The charging circuit 120 conducts constant current charging during a short period of time of several or several tens of seconds, thereby rapidly charging the electric double layer capacitor 110.

Due to the charging of the electric double layer capacitor 110, if the charged voltage V rises and reaches the charge complete voltage VH at time T6, the voltage detection circuit 140 gives the power supply control circuit 150 an OFF command while the charging circuit 120 has not been switched to a constant voltage charging state. The power supply control circuit 150 turns off the power switch 160 and completely isolates the power supply unit 170 of the electronic device from the AC power source 10.

In this manner, in the standby time of the electronic device, when the charged voltage V of the electric double layer capacitor 110 reaches the charging complete voltage VH, constant voltage charging is not performed but the power switch 160 is immediately turned off to prevent decrease in charging energy efficiency.

As the function unit 190 of the electronic device is turned off by the OFF command from the controller 180, the power supply unit 170 of the electronic device is completely isolated again from the AC power source 10. At this point, power loss is zero. However, the charged voltage V of the electric double layer capacitor 110 gradually drops because the power consumption of the controller 180 is very small. When the user gives the controller 180 on standby an ON command for turning on the electronic device at time T7 when the charged voltage V of the electric double layer capacitor 110 has not reached the charge complete voltage VL yet, the controller 180 gives the power supply control circuit 150 an ON command for turning on the power switch 160. Having received the ON command from the controller 180, the power supply control circuit 150 turns on the power switch 160 by using the electrical energy charged in the electric double layer capacitor 110, regardless of the charged voltage V of the electric double layer capacitor. When the power switch 160 is turned on, the power supply unit 170 of the electronic device can be connected to the AC power source 10 to supply electric power required to operate the electronic device.

If the user switches off the electronic device and then pulls out the power code from the AC power source 10 and keeps the electronic device for a long time, the charged voltage V of the electric double layer capacitor 110 continues to drop and reaches the charge initiation voltage VL because the controller 180 keeps working even when the electronic device is kept. When the charged voltage V of the electric double layer capacitor 110 reaches the charge initiation voltage VL, the voltage detection circuit 140 transmits an ON command to the power supply control circuit 150, and the power supply control circuit 150 turns on the power switch 160. However, because the power code of the electronic device is separated on purpose from the AC power source 10, the electric double layer capacitor 110 is not recharged but gradually discharged, and the energy charged in the electric double layer capacitor 10 is exhausted. At this point, the power switch 160 is kept in the on state. Thus, when the power code of the electronic device is re-connected to the AC power source 10 later, the power supply unit 160 is connected to the AC power source 10 and able to start working.

As seen from above, the apparatus 10 for reducing standby power according to an exemplary embodiment of the present invention can completely cut off the AC power source 10 when the electronic devices is in standby state, thereby reducing power loss to zero.

Moreover, the apparatus 100 for reducing standby power according to an exemplary embodiment of the present invention can minimize standby power losses by using energy charged in the electric double layer capacitor (ELDC) as energy for switching an electronic device from ON state to OFF state or from OFF state to ON state. Also, the apparatus 100 can operate only the power supply unit 170 of the electronic device, when the charged energy of the electric double layer capacitor 110 reaches the charge initiation voltage VL, to perform recharging within several or several tens of seconds, thereby unlimitedly lengthening the standby time of the electronic device.

Although the above description is merely an exemplary embodiment for embodying the apparatus for reducing standby power according to the present invention, the present invention is not limited thereto. A person skilled in the art will appreciate that various modifications are possible, without departing from the gist of the invention as disclosed in the accompanying claims, and the modification should not be interpreted as separately from the technical spirit of the present invention.

## Claims

1. An apparatus for reducing standby power in an electronic device operating by an AC power source, the standby power reduction device comprising:
an electric double layer capacitor for converting electrical energy supplied from the AC power source into DC power and storing the converted electrical energy;
a charging circuit for charging the electrical energy in the electric double layer capacitor;
a voltage conversion circuit for converting the electrical energy charged in the electrical double layer capacitor into a stable voltage;
a voltage detection circuit for detecting a charged voltage of the electric double layer capacitor; and
a power supply control circuit for turning on/off a power switch in response to a command from the voltage detection circuit,
wherein the power supply control circuit uses the electrical energy charged in the electrical double layer capacitor to turn on/off the power switch.

2. The apparatus of claim 1, wherein the electrical double layer capacitor is charged with electrical energy within several or several tens of seconds.

3. The apparatus of claim 1, wherein the electronic device further comprises a controller for controlling the electronic device.

4. The apparatus of claim 3, wherein the voltage conversion circuit provides a stable voltage to the controller.

5. The apparatus of claim 3, wherein the power supply control circuit gives the power switch an ON command by performing OR operation of an ON command from the voltage detection circuit and an ON command from the controller.

6. The apparatus of claim 3, wherein the power supply control circuit gives the power switch an OFF command by performing AND operation of an OFF command from the voltage detection circuit and an OFF command from the control circuit.

7. The apparatus of claim 1, wherein, when the charged voltage of the electric double layer capacitor reaches a charge initiation voltage, the voltage detection circuit sends an ON signal to the power supply control circuit.

8. The apparatus of claim 1, wherein, when the charged voltage of the electric double layer capacitor reaches a charge complete voltage, the voltage detection circuit sends an OFF signal to the power supply control circuit.

9. The apparatus of claim 1, wherein the electronic device comprises a power supply unit for supplying electric power, and the power switch connects or disconnects the AC power source to or from the power supply unit.

10. The apparatus of claim 9, wherein the charging circuit takes charging power from the power supply unit when charging the electric double layer capacitor.

11. The apparatus of claim 1, wherein, when the electronic device is in OFF state and the charged voltage of the electric double layer capacitor reaches the charge initiation voltage, the electric double layer capacitor is recharged within several or several tens of seconds by constant current charging.

12. The apparatus of claim 1, wherein, when the electronic device is in OFF state, the electric double layer capacitor is charged by constant current charging, and when the charged voltage of the electric double layer capacitor reaches a charge complete voltage, the charging is stopped.

13. The apparatus of claim 1, wherein, when the electronic device is in ON state, the electric double layer capacitor is charged by constant current charging, and when the charged voltage of the electric double layer capacitor reaches a charge complete voltage, the electric double layer capacitor is fully charged by constant voltage charging.

14. The apparatus of claim 1, wherein, when the power code of the electronic device is separated on purpose from the AC power source, the charged voltage of the electric double layer capacitor is equal to or lower than a charge initiation voltage and the power switch is turned on, and when the power code is re-connected to the AC power source, the electronic device is connected to the AC power source by the turned-on power switch.
